# EUROPEAN PATENT APPLICATION

(11) **EP 4 582 767 A1**
(43) Date of publication of application: **09.07.2025**
(21) Application number: 23859851.0
(22) Date of filing: 10.07.2023
(51) Int. Cl.: G01B 7/00, F16K 37/00

(54) **SPOOL DISPLACEMENT DETECTION DEVICE**

(30) Priority: 29.08.2022 JP 2022135704
(71) Applicant: KYB Corporation, Minato-ku, Tokyo 105-5128 (JP)
(72) Inventor: HIRUMA, Tatsuya, Tokyo 105-5128 (JP); OGAYA, Yoshikazu, Tokyo 105-5128 (JP); YOSHIDA, Nobuyoshi, Tokyo 105-5128 (JP)
(74) Representative: Grünecker Patent- und Rechtsanwälte PartG mbB
(86) International application number: PCT/JP2023/025462
(87) International publication number: WO 2024/048081

(57) **Abstract**

The spool-displacement detection device (100) for detecting the displacement amount of the spool (53) of the fluid pressure valve device (50) serving as the valve device having the housing (51), the accommodating hole (52) formed in the housing (51), and the spool (53) slidably accommodated in the accommodating hole (52) includes: the rod (60) supported at the one end portion by the spool (53); the cap (70) attached to the opening of the accommodating hole (52) at the end surface (51a) of the housing (51); the magnet (65) provided on the rod (60); and the detection unit (80) configured to detect the change in the magnetic field due to the displacement of the magnet (65), the cap (70) is provided with the insertion hole (71) through which the rod (60) is inserted so as to be reciprocatable in the displacement direction and into which the fluid biasing the spool (53) is guided, and the detection unit (80) is attached to the outer circumferential surface (70c) of the cap (70).

## Description

### TECHNICAL FIELD

The present invention relates to a spool-displacement detection device.

### BACKGROUND ART

JP2017-62146A discloses a spool valve position detection device that detects the position of a spool valve, which is slidably accommodated in a housing, the spool valve position detection device including a magnet that is mounted on the spool valve and a detection unit that is arranged so as to face the magnet and that is attached to the housing, and the detection unit being configured to output a signal in accordance with the position of the spool valve by detecting a change in a magnetic field that is changed in accordance with the displacement of the spool valve. In the spool valve position detection device described in JP2017-62146A, in the housing that accommodates the spool valve, a cap is fixed to an opening end of a spool hole, into which the spool valve is slidably inserted. A pilot chamber, where an end portion of the spool valve faces and into which the pilot pressure is guided, is provided in the cap. In addition, a magnetic sensor having the detection unit is attached to the cap, and the magnetic sensor is arranged so as to face the annular magnet, which is mounted on the spool valve.

### SUMMARY OF INVENTION

With the spool valve position detection device as described in JP2017-62146A, the magnetic sensor is provided by penetrating through the cap so as to face the pilot chamber formed in the cap. Therefore, a sealing is required between the cap and the magnetic sensor such that the fluid in the cap (in the pilot chamber) does not leak outside.

An object of the present invention is to provided a configuration that does not require a sealing in a spool-displacement detection device.

According to one aspect of the present invention, a spool-displacement detection device for detecting a displacement amount of a spool of a valve device having a housing, an accommodating hole formed in the housing, and the spool slidably accommodated in the accommodating hole, the spool-displacement detection device includes: a displacement member supported at one end portion by the spool and configured to be displaced together with the spool; a cap attached to an opening of the accommodating hole at an end surface of the housing; a magnet provided on the displacement member and configured to be displaced together with the displacement member; and a detection unit configured to detect a change in a magnetic field due to the displacement of the magnet, the cap is provided with an insertion hole through which the displacement member is inserted so as to be reciprocatable in a displacement direction and into which fluid biasing the spool is guided, and the detection unit is attached to an outer circumferential surface of the cap.

### BRIEF DESCRIPTION OF DRAWINGS

[FIG. 1] FIG. 1 is a sectional view showing a fluid pressure valve system according to an embodiment of the present invention.
[FIG. 2] FIG. 2 is a sectional view showing the fluid pressure valve system according to a first modification of the embodiment of the present invention.
[FIG. 3] FIG. 3 is a perspective view showing the fluid pressure valve system according to a third modification of the embodiment of the present invention.
[FIG. 4] FIG. 4 is a perspective view showing the fluid pressure valve system according to the third modification of the embodiment of the present invention and shows a state in which a magnetic shield is not attached.

### DESCRIPTION OF EMBODIMENTS

A spool-displacement detection device 100 according to an embodiment of the present invention will be described with reference to the drawings. In this embodiment, the spool-displacement detection device 100 is provided on a fluid pressure valve system 1. The fluid pressure valve system 1 has a fluid pressure valve device 50 having a spool 53 and the spool-displacement detection device 100 that detects a displacement amount of the spool 53.

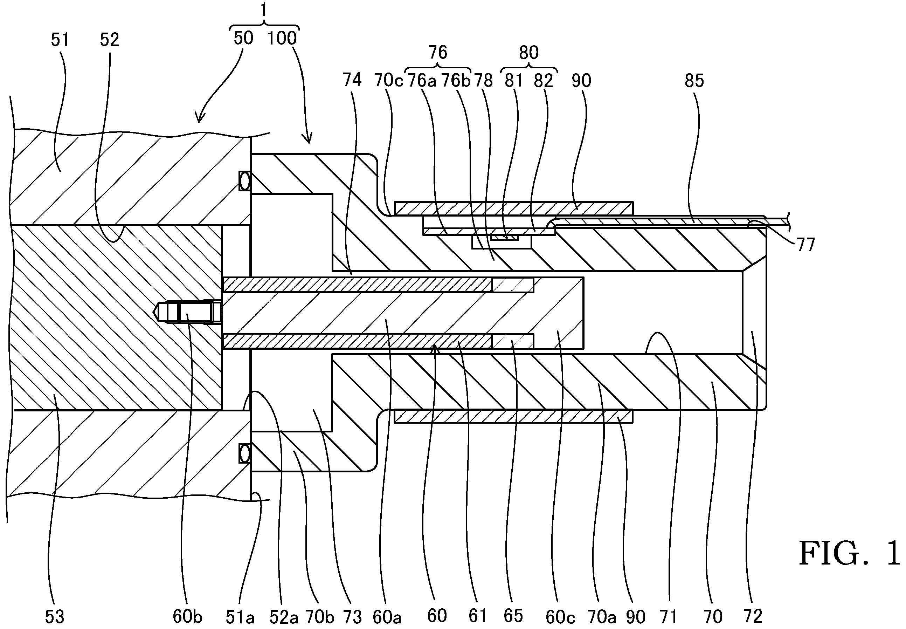

As shown in FIG. 1, the fluid pressure valve device 50 serving as a valve device has a housing 51, an accommodating hole 52 that is formed in the housing 51, and the spool 53 that is slidably accommodated in the accommodating hole 52. The accommodating hole 52 opens at an end surface 51a of the housing 51. The spool 53 can reciprocate in the axial direction within the accommodating hole 52. As described below, as the spool 53 is displaced in the axial direction by the pressure of working fluid, an opening and closing of a port (not shown) formed in the housing 51 is controlled. In this embodiment, the fluid pressure valve device 50 has a single accommodating hole 52 and a single spool 53.

The spool-displacement detection device 100 is a stroke sensor for detecting the displacement amount (the stroke amount) of the spool 53 of the fluid pressure valve device 50. The spool-displacement detection device 100 is attached to the end surface 51a of the housing 51.

The spool-displacement detection device 100 includes a rod 60 serving as a displacement member that is supported at one end portion by the spool 53 and that is displaced together with the spool 53, a cap 70 that is attached to the end surface 51a of the housing 51, a magnet 65 that is provided on the rod 60 and that is displaced together with the rod 60, a detection unit 80 that detects a change in a magnetic field caused by the displacement of the magnet 65, and a magnetic shield 90 serving as a cover that shields external magnetism acting on the detection unit 80.

The rod 60 is formed of a non-magnetic material. The rod 60 is formed so as to have the outer diameter smaller than that of the spool 53 and is provided so as to be concentric with the spool 53. The rod 60 has a shaft portion 60a that extends in the axial direction, a screw portion 60b that is formed on the one end portion (the end portion on the left side in FIG. 1) of the shaft portion 60a, and a large-diameter portion 60c that is formed on the other end portion (the end portion on the right side in FIG. 1) of the shaft portion 60a. The rod 60 is fastened and fixed to the spool 53 by the screw portion 60b. It suffices that the rod 60 has a configuration in which the one end portion thereof is supported by the spool 53, and the configuration is not limited to the screw fastening.

A collar 61 and the magnet 65 are provided on an outer circumferential surface of the shaft portion 60a. The magnet 65 is a cylindrical permanent magnet containing rare earth elements such as Nd, Sm, and so forth. The magnet 65 is formed such that the inner diameter is substantially the same as the outer diameter of the shaft portion 60a or is smaller than the outer diameter of the shaft portion 60a. The magnet 65 is attached to the rod 60 by press-fitting the shaft portion 60a into the inner circumferential surface of the magnet 65 and causing the shaft portion 60a to come into contact with the large-diameter portion 60c. The collar 61 clamps the magnet 65 together with the large-diameter portion 60c, thereby securing the magnet 65. With such a configuration, the magnet 65 is fixed to the spool 53 via the rod 60. As described below, the magnet 65 opposes to the detection unit 80 with the cap 70 interposed therebetween. In this manner, the rod 60 is fixed to the spool 53, and the magnet 65 is fixed to the rod 60, and so, the spool 53, the rod 60, and the magnet 65 are moved integrally. In addition, the collar 61, the magnet 65, and the large-diameter portion 60c are formed so as to have substantially the same outer diameter. Therefore, the rod 60, to which the collar 61 and the magnet 65 are attached, has a substantially uniform outer diameter along the axial direction.

The cap 70 is formed to have a tubular shape. The cap 70 is attached to an opening 52a of the accommodating hole 52 that opens at the end surface 51a of the housing 51. In other words, the cap 70 is attached to the end surface 51a so as to surround the opening 52a. The cap 70 includes an insertion hole 71 that is formed so as to extend in the axial direction, a pilot port 72 that is formed on the one end portion (the end portion on the right side in FIG. 1) of the insertion hole 71, and a pilot chamber 73 that is formed on the other end portion (the end portion on the left side in FIG. 1) of the insertion hole 71 and that opens at an end surface of the cap 70 on the housing 51 side.

The insertion hole 71 is formed so as to be concentric with the spool 53 and the rod 60, and the rod 60 is inserted into the insertion hole 71 so as to be reciprocatable in the displacement direction (the axial direction). In this embodiment, the insertion hole 71 is provided so as to have the larger diameter than the large-diameter portion 60c of the rod 60 and so as to have the smaller diameter than the spool 53 (so as to be smaller than the outer diameter of the spool 53). An annular passage 74 serving as an annular gap is formed between an inner circumferential surface of the insertion hole 71 and an outer circumferential surface of the rod 60 (specifically, the outer circumferential surface of the large-diameter portion 60c and the outer circumferential surfaces of the collar 61 and the magnet 65).

The pilot port 72 is formed so as to be concentric with the insertion hole 71 and opens to the outside of the cap 70. The working fluid serving as a fluid is guided into an interior of the cap 70 from a fluid pressure source (not shown) through the pilot port 72. By the working fluid guided from the pilot port 72 into the interior of the cap 70 (an interior of the insertion hole 71), a force that biases the rod 60 towards the spool 53 acts on the large-diameter portion 60c of the rod 60. In other words, the working fluid biasing the spool 53 is guided to the insertion hole 71 through the pilot port 72.

The pilot chamber 73 communicates with the insertion hole 71 and is formed so as be concentric with the insertion hole 71. The pilot chamber 73 is provided so as to face the accommodating hole 52 of the housing 51 and is provided so as to have a larger diameter than the spool 53, the accommodating hole 52, and the insertion hole 71. The cap 70 has a shape in which a small-diameter portion 70a that corresponds to the insertion hole 71 and a large-diameter portion 70b that corresponds to the pilot chamber 73 and that is formed to have a larger outer diameter than the small-diameter portion 70a are provided. In other words, the small-diameter portion 70a is provided with the insertion hole 71, and the large-diameter portion 70b is provided with the pilot chamber 73. The pilot chamber 73 communicates with the pilot port 72 through the annular passage 74. In other words, the working fluid that has been guided from the pilot port 72 is guided into the pilot chamber 73 through the annular passage 74. Due to the pressure of the working fluid in the pilot chamber 73, a force is applied to the spool 53 in the leftward direction in FIG. 1. In other words, in the spool-displacement detection device 100 of this embodiment, the spool 53 is biased towards the left side in FIG. 1 via the rod 60 by the working fluid in the insertion hole 71, and the spool 53 is directly biased towards the left side in FIG. 1 by the working fluid in the pilot chamber 73. As the spool 53 is displaced in the axial direction by the pressure of the working fluid, the opening and closing of a port (not shown) formed in the housing 51 is controlled.

In addition, because the pilot chamber 73 is provided so as to have the diameter larger than that of the accommodating hole 52, the spool 53 can enter the pilot chamber 73. In contrast, because the insertion hole 71 is provided so as to have the diameter smaller than that of the spool 53, the spool 53 cannot enter the insertion hole 71. In other words, the movement of the spool 53 towards the right side in FIG. 1 is restricted by the boundary between the pilot chamber 73 and the insertion hole 71. As described above, the movement of the spool 53 towards the right in FIG. 1 is restricted by the spool 53, rather than the rod 60, coming into contact with the interior of the cap 70. Therefore, the rod 60, and the collar 61 and the magnet 65 attached to the rod 60 are prevented from being damaged.

In addition, the cap 70 is provided with: a recessed portion 76 that is provided in an outer circumferential surface 70c of the small-diameter portion 70a and that is recessed so as not to communicate with the insertion hole 71; and a groove 77 that is formed in the outer circumferential surface 70c so as to be continuous with the recessed portion 76. The recessed portion 76 is a stepped hole that is provided by being recessed from the outer circumferential surface 70c towards the insertion hole 71. The recessed portion 76 has a first step portion 76a that is provided by being recessed from the outer circumferential surface 70c and a second step portion 76b that is provided by being recessed from the first step portion 76a. As described above, because the recessed portion 76 is provided by being recessed from the outer circumferential surface 70c, the interior of the recessed portion 76 is closer to the insertion hole 71 than the outer circumferential surface 70c of the small-diameter portion 70a in the redial direction. The recessed portion 76 (the second step portion 76b) and the insertion hole 71 are separated by a wall portion 78. The groove 77 is provided so as to entirely open to the outer circumferential surface 70c of the small-diameter portion 70a. The groove 77 is provided so as to extend linearly from the recessed portion 76 towards the pilot port 72 side (towards the right side in FIG. 1) and opens at the end surface of the cap 70 on the pilot port 72 side.

The detection unit 80 has a magnetic sensor 81, such as a Hall element, a magneto resistive element, and so forth, that outputs an output value in accordance with the change in the magnetic field due to the displacement of the magnet 65 and a substrate 82 on which the magnetic sensor 81 is mounted. The detection unit 80 is attached to the recessed portion 76. Specifically, the substrate 82 is directly attached to the first step portion 76a of the recessed portion 76 by, for example, a bolt, etc. in a state in which the magnetic sensor 81 faces towards the insertion hole 71 side. With such a configuration, the detection unit 80 is assembled to the cap 70. As shown in FIG. 1, the magnetic sensor 81 is provided within a space defined by the second step portion 76b, and the magnetic sensor 81 is provided so as to oppose to the magnet 65 with the wall portion 78 interposed therebetween. The substrate 82 has an amplifier circuit (not shown) that amplifies the output of the magnetic sensor 81. A wiring 85 is connected to the substrate 82. The wiring 85 electrically connects the detection unit 80 and an external device (not shown).

The detection unit 80 outputs a detection value that corresponds to the displacement amount of the rod 60, in other words, the displacement amount (the stroke amount) of the spool 53 fixed to the rod 60. In the spool-displacement detection device 100, as the rod 60 is displaced in the axial direction, the magnet 65 is also displaced, and the direction and the magnitude of the magnetic flux passing through the magnetic sensor 81 are changed. The output value of the magnetic sensor 81 is changed in accordance with the change in the direction and the magnitude of the magnetic flux passing through the magnetic sensor 81. Therefore, the spool-displacement detection device 100 can detect the displacement amount of the rod 60, in other words, the displacement amount of the spool 53 on the basis of the output value of the magnetic sensor 81.

The magnetic shield 90 is formed of a soft magnetic material having a small coercive force such as an iron-based alloy, etc. capable of shielding the magnetism and suppresses the influence of external magnetism from outside the spool-displacement detection device 100 on the detection unit 80. The magnetic shield 90 has a cylindrical shape, and a hole, a notch, or the like that penetrates therethrough in the redial direction is not formed. The magnetic shield 90 is provided on the outer circumferential surface 70c of the small-diameter portion 70a so as to cover the recessed portion 76 in a state in which the detection unit 80 is attached to the recessed portion 76. The magnetic shield 90 is provided so as to cover the entirety of the recessed portion 76 and a part of the groove 77. In other words, even when the magnetic shield 90 is attached and the entirety of the recessed portion 76 is covered, a part of the groove 77 is not covered by the magnetic shield 90. In other words, in a state in which the magnetic shield 90 is attached, the groove 77 functions as a passage through which the recessed portion 76 communicates with the outside. The wiring 85, which is connected to the substrate 82, is inserted into the groove 77. As described above, even in a state in which the magnetic shield 90 is attached and the entirety of the recessed portion 76 is covered, by inserting the wiring 85 into the groove 77, it is possible to electrically connect the detection unit 80 in the recessed portion 76 and the external device. The magnetic shield 90 may be provided so as to cover the entirety of the groove 77. In such a case, because the groove 77 opens at the end surface of the cap 70 on the pilot port 72 side, the wiring 85 is inserted into the groove 77 through the opening.

Here, in order to connect the detection unit 80 in the recessed portion 76 and the external device by the wiring 85, it is conceivable to form a hole, a notch, or the like penetrating through the magnetic shield 90 in the redial direction. However, in such a case, because the recessed portion 76 is exposed to the outside, contaminant, etc. easily enters the recessed portion 76. In contrast, in the spool-displacement detection device 100 in this embodiment, instead of forming the notch, etc. in the magnetic shield 90, the groove 77 is formed in the cap 70, and the wiring 85 is inserted into the groove 77. In addition, because the recessed portion 76 is covered by the magnetic shield 90, the recessed portion 76 is not exposed to the outside, and the entrance of the contaminant, etc. into the recessed portion 76 is prevented. Furthermore, because the wiring 85 is supported by the groove 77, even if the cap 70 is vibrated due to the operation of the fluid pressure valve device 50, the vibration of the wiring 85 is suppressed, and the wiring 85 is prevented from being damaged. In addition, because the notch, etc. is not formed in the magnetic shield 90, there is no need to consider orientation when the magnetic shield 90 is to be attached, and thus, a mountability of the magnetic shield 90 is improved.

As described above, in the spool-displacement detection device 100, the detection unit 80 is attached in the recessed portion 76 of the outer circumferential surface 70c of the cap 70. Because the detection unit 80 is attached in the recessed portion 76, it is possible to bring the detection unit 80 closer to the magnet 65 compared to a case in which the detection unit 80 is attached to the outer circumferential surface 70c of the small-diameter portion 70a. With such a configuration, the detection accuracy of the spool-displacement detection device 100 is improved. Furthermore, the recessed portion 76 does not communicate with the insertion hole 71 of the cap 70, and the recessed portion 76 is separated from the insertion hole 71 by the wall portion 78 of the cap 70. Therefore, the recessed portion 76 does not communicate with the pilot port 72 which is in communication with the insertion hole 71. In other words, there is no need to seal between the detection unit 80 and the cap 70, and so, the need for sealing in the spool-displacement detection device 100 is not required anymore. Thus, compared with a case in which, a hole, which is in communication with the insertion hole 71, is formed instead of the recessed portion 76 and the detection unit 80 is attached to the hole, the working fluid that has been guided to the pilot port 72 is prevented from being leaked to the outside due to the attachment structure of the detection unit 80.

In addition, in the spool-displacement detection device 100, the recessed portion 76 is formed in the outer circumferential surface 70c of the small-diameter portion 70a having the diameter smaller than that of the large-diameter portion 70b. Compared with a case in which the small-diameter portion 70a has the same diameter as the large-diameter portion 70b, the outer circumferential surface 70c is closer to the magnet 65 in the redial direction. Therefore, the depth of the recessed portion 76 in the redial direction can be smaller. As a result, machining of the recessed portion 76 is facilitated.

In addition, in the spool-displacement detection device 100, because the annular passage 74 is formed by utilizing a part of the insertion hole 71, there is no need to provide a separate passage in the cap 70 for guiding the fluid from the pilot port 72 to the pilot chamber 73. Therefore, it is possible to reduce the size of the cap 70. Furthermore, even if the rod 60 and the insertion hole 71 are formed to have smaller diameters in order to reduce the size of the cap 70, because the pilot chamber 73 has a larger diameter, it is possible to ensure a pressure receiving area for the spool 53. Although the pressure receiving area of the spool 53 is reduced, the pilot chamber 73 may not be provided in the cap 70. In other words, the other end portion (the end portion on the left side in FIG. 1) of the insertion hole 71 may be formed by being directly opened at the end surface of the cap 70 on the housing 51 side. In addition, the annular passage 74 may be formed by machining the inner circumferential surface of the insertion hole 71.

In addition, in the spool-displacement detection device 100, because the outer diameter of the rod 60 is smaller than that of the spool 53, it is possible to reduce the redial dimension of the small-diameter portion 70a in which the insertion hole 71 is provided.

In addition, because the spool-displacement detection device 100 is attached to the end surface 51a of the housing 51 of the fluid pressure valve device 50, by matching the size of the large-diameter portion 70b of the cap 70 to a conventional fluid pressure valve device, the spool-displacement detection device 100 can also be attached to a conventional fluid pressure valve device with ease. As a result, by attaching the spool-displacement detection device 100 to the conventional fluid pressure valve device 50, it is possible to easily perform a modification to obtain the fluid pressure valve system 1 that can detect the displacement amount of the spool 53.

According to the above-described embodiment, the following operational advantages are obtained.

In the spool-displacement detection device 100, the recessed portion 76 does not communicate with the insertion hole 71 of the cap 70, and the recessed portion 76 is separated from the insertion hole 71 by the wall portion 78 of the cap 70. As a result, there is no need to seal between the detection unit 80 and the cap 70, the working fluid that has been guided to the pilot port 72 is prevented from being leaked to the outside, and the sealing property in the cap 70 is improved.

In the spool-displacement detection device 100, because the outer diameter of the rod 60 is smaller than that of the spool 53, it is possible to reduce the redial dimension of the small-diameter portion 70a in which the insertion hole 71 is provided. Furthermore, because the detection unit 80 is attached in the recessed portion 76 that is provided in the small-diameter portion 70a, it is possible to reduce the distance between the magnet 65 and the detection unit 80, thereby improving the detection accuracy of the spool-displacement detection device 100. In addition, even if the diameters of the rod 60 and the insertion hole 71 are reduced in order to reduce the size of the cap 70, because the pilot chamber 73 has a large diameter, it is possible to ensure the pressure receiving area of the spool 53.

Following modifications are also within the scope of the present invention, and it is also possible to combine the configurations shown in the modification with the configurations described in the above-described embodiment, and to combine the configurations described in the following different modifications.

### <First Modification>

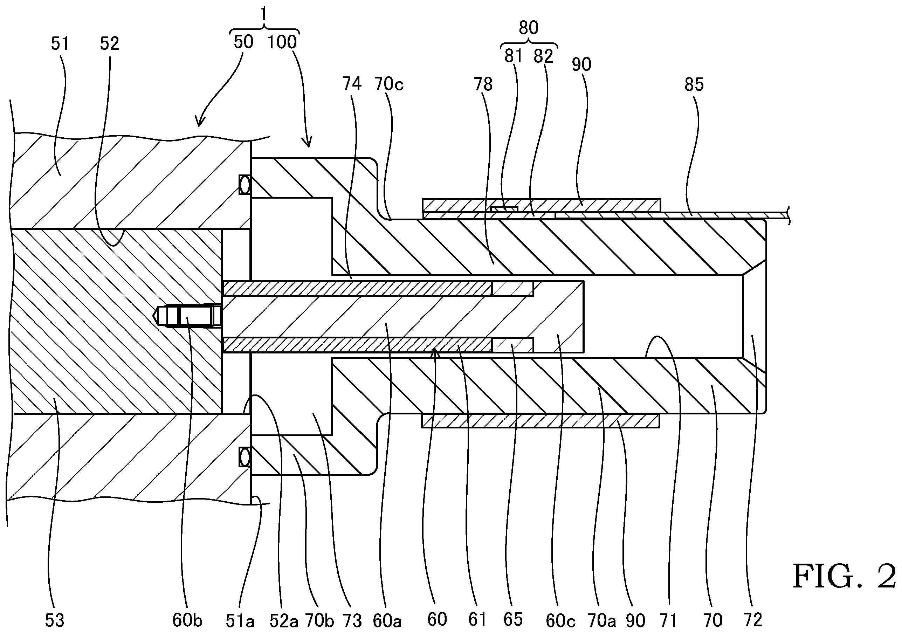

In the above-described embodiment, the detection unit 80 is attached to the recessed portion 76 that is formed in the outer circumferential surface 70c of the cap 70. The present invention is not limited to this configuration, and as shown in FIG. 2, the recessed portion 76 may not be formed in the outer circumferential surface 70c, and the detection unit 80 may be directly attached to the outer circumferential surface 70c. For example, in the detection unit 80, the substrate 82 may be attached to the outer circumferential surface 70c by a bolt, etc. A flat surface may be formed in the outer circumferential surface 70c first, and the substrate 82 may then be attached to the flat surface. The magnetic shield 90 is provided so as to cover the entirely of the detection unit 80 and a part of the wiring 85. Even in such a case, the detection unit 80 does not face the insertion hole 71 of the cap 70, and the detection unit 80 is separated from the insertion hole 71 by the wall portion 78 of the cap 70. Therefore, there is no need to seal between the detection unit 80 and the cap 70, and the fluid that has been guided to the insertion hole 71 is prevented from being leaked to the outside due to the attachment structure of the detection unit 80. However, it is preferable to attach the detection unit 80 to the recessed portion 76 that is formed in the outer circumferential surface 70c of the cap 70 as in the above-described embodiment, because the distance between the magnet 65 and the detection unit 80 can be reduced.

### <Second Modification>

In the above-described embodiment, the pilot port 72 is formed in the one end portion (the end portion on the right side in FIG. 1) of the insertion hole 71. The present invention is not limited to this configuration, and it suffices to employ a configuration in which the pilot port 72 is in communication with the insertion hole 71, and for example, it may be possible to employ a configuration in which the pilot port 72 is in communication with the insertion hole 71 and opens at the outer circumferential surface 70c of the small-diameter portion 70a.

### <Third Modification>

In the above-described embodiment, the fluid pressure valve device 50 has a single accommodating hole 52 and a single spool 53. The present invention is not limited to this configuration, and it may be possible to employ a configuration in which the fluid pressure valve device 50 has a plurality of accommodating holes 52 that are formed in the housing 51 and a plurality of spools 53 that are respectively accommodated in the plurality of accommodating holes 52 in a slidable manner. In such a case, the spool-displacement detection device 100 is provided with a plurality of rods 60, a plurality of insertion holes 71 and recessed portions 76 of the cap 70, a plurality of magnets 65, and a plurality of detection units 80 in a manner corresponding to the plurality of spools 53. Specifically, the plurality of rods 60 are respectively fixed to the plurality of spools 53, the plurality of insertion holes 71 are respectively provided so as to be concentric with the plurality of spools 53, and the plurality of recessed portions 76 are respectively provided in the outer circumferential surfaces 70c of the plurality of small-diameter portions 70a correspondingly to the plurality of insertion holes 71. In addition, the plurality of magnets 65 are respectively attached to the plurality of rods 60, and the plurality of detection units 80 are respectively attached to the plurality of recessed portions 76. In addition, as described below, the magnetic shield 190 is provided so as to cover the plurality of recessed portions 76 in a continuous manner.

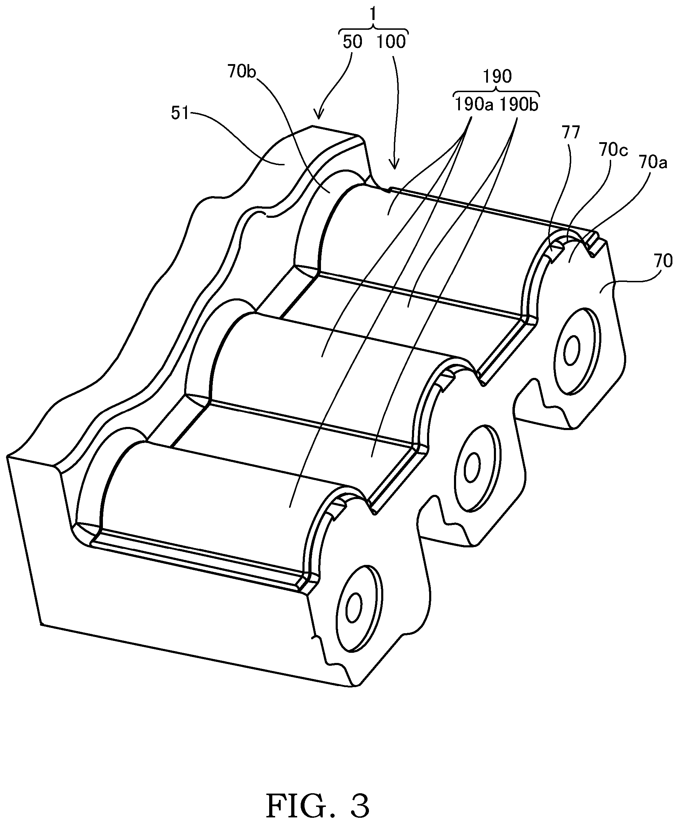

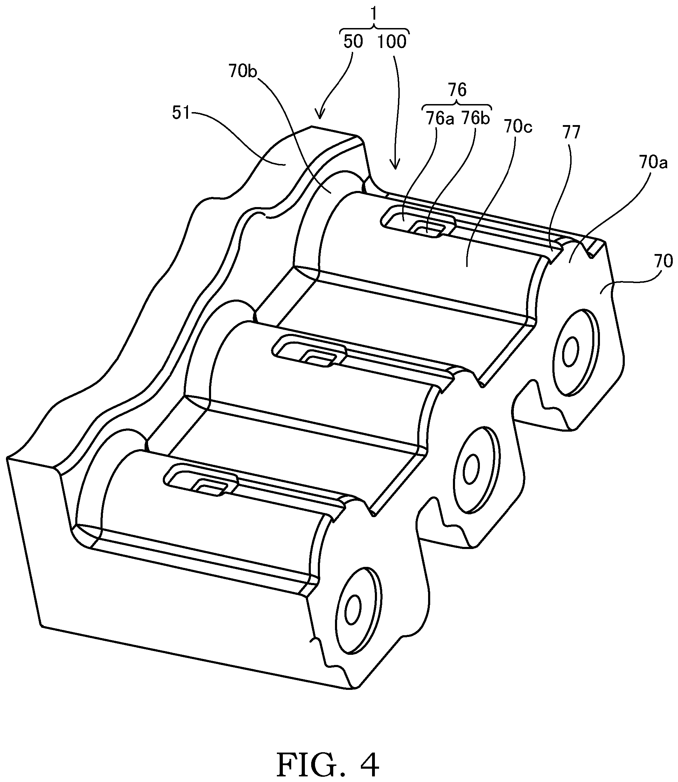

FIGs. 3 and 4 are each a perspective view showing the fluid pressure valve system 1 of this modification, and FIG. 3 shows a state in which the magnetic shield 190 is attached, and FIG. 4 shows a state before the magnetic shield 190 and the detection unit 80 are attached. As shown in FIG. 3, the magnetic shield 190 has a plurality of semicircular portions 190a that are each formed to have a semicircular shape and a plurality of planar portions 190b each having a planar surface that respectively connect the plurality of semicircular portions 190a that are adjacent to each other. The magnetic shield 190 is attached so as to respectively cover the plurality of outer circumferential surfaces 70c of the small-diameter portions 70a with the plurality of semicircular portions 190a such that the plurality of recessed portions 76 are respectively covered. With such a configuration, even with the fluid pressure valve device 50 having the plurality of spools 53, the plurality of detection units 80 can be covered with a single magnetic shield 190. Note that the spool-displacement detection device 100 may not have a configuration in which the plurality of insertion holes 71 and the plurality of recessed portions 76 are provided for a single cap 70 as shown in FIGs. 3 and 4. A plurality of caps 70 may be provided correspondingly to the plurality of spools 53.

### <Fourth Modification>

In the above-described embodiment, as the cover that covers the recessed portion 76, the magnetic shield 90, which shields the external magnetism acting on the detection unit 80, is provided. However, the cover that covers the recessed portion 76 is not limited to the magnetic shield 90, and for example, the cover may also be a dustproof cover or waterproof cover.

The configurations, operations, and effects of the embodiments of the present invention will be collectively described below.

The spool-displacement detection device 100 for detecting the displacement amount of the spool 53 of the fluid pressure valve device 50 serving as the valve device having the housing 51, the accommodating hole 52 formed in the housing 51, and the spool 53 slidably accommodated in the accommodating hole 52 includes: the rod 60 serving as the displacement member supported at the one end portion by the spool 53 and configured to be displaced together with the spool 53; the cap 70 attached to the opening of the accommodating hole 52 at the end surface 51a of the housing 51; the magnet 65 provided on the rod 60 and configured to be displaced together with the rod 60; and the detection unit 80 configured to detect the change in the magnetic field due to the displacement of the magnet 65, wherein the cap 70 is provided with the insertion hole 71 through which the rod 60 is inserted so as to be reciprocatable in the displacement direction and into which the fluid biasing the spool 53 is guided, and the detection unit 80 is attached to the outer circumferential surface 70c of the cap 70.

With this configuration, the detection unit 80 is attached to the outer circumferential surface 70c of the cap 70. The detection unit 80 does not face the insertion hole 71 of the cap 70, and the detection unit 80 is separated from the insertion hole 71 by the wall portion 78 of the cap 70. Therefore, there is no need to seal between the detection unit 80 and the cap 70, and the fluid that has been guided to the insertion hole 71 is prevented from being leaked to the outside due to the attachment structure of the detection unit 80.

In addition, in the spool-displacement detection device 100, the rod 60 is formed so as to have the outer diameter smaller than that of the spool 53, and the cap 70 is provided with: the small-diameter portion 70a in which the insertion hole 71 is provided and the detection unit 80 is attached to the outer circumferential surface of the small-diameter portion 70a; the pilot chamber 73 communicating with the insertion hole 71 such that the fluid is guided to the pilot chamber 73, and the pilot chamber 73 having the diameter larger than that of the insertion hole 71 such that the spool 53 can enter the pilot chamber 73; and the large-diameter portion 70b in which the pilot chamber 73 is provided and formed to have the outer diameter larger than that of the small-diameter portion 70a.

With this configuration, because the outer diameter of the rod 60 is smaller than that of the spool 53, it is possible to reduce the redial dimension of the small-diameter portion 70a in which the insertion hole 71 is provided. Furthermore, because the detection unit 80 is attached to the outer circumferential surface of the small-diameter portion 70a, it is possible to reduce the distance between the magnet 65 and the detection unit 80, thereby improving the detection accuracy of the spool-displacement detection device 100. In addition, even if the diameters of the rod 60 and the insertion hole 71 are reduced in order to reduce the size of the cap 70, because the pilot chamber 73 has a large diameter, it is possible to ensure the pressure receiving area of the spool 53.

In addition, in the spool-displacement detection device 100, the insertion hole 71 is formed so as to be smaller than the outer diameter of the spool 53.

With this configuration, the movement of the spool 53 is restricted by the boundary between the large-diameter portion 70b (the pilot chamber 73) and the small-diameter portion 70a (the insertion hole 71). The movement of the spool 53 is restricted by the spool 53, rather than the rod 60, coming into contact with the interior of the cap 70. Therefore, the rod 60, and the magnet 65 provided on the rod 60 are prevented from being damaged.

In addition, the spool-displacement detection device 100 further includes: the recessed portion 76 formed in the outer circumferential surface 70c of the cap 70, recessed so as not to communicate with the insertion hole 71, and to which the detection unit 80 is attached; and the magnetic shield 90, 190 serving as the cover provided so as to cover the recessed portion 76, wherein the outer circumferential surface 70c of the cap 70 is provided with the groove 77 formed so as to be continuous with the recessed portion 76, and the wiring 85 for electrically connecting the detection unit 80 and the external device is inserted into the groove 77.

With this configuration, because the detection unit 80 is attached to the recessed portion 76 provided in the outer circumferential surface 70c of the cap 70, it is possible to reduce the distance between the magnet 65 and the detection unit 80, thereby improving the detection accuracy of the spool-displacement detection device 100. In addition, with this configuration, the groove 77 is formed in the cap 70, and the wiring 85 is inserted into the groove 77. In addition, because the recessed portion 76 is covered by the magnetic shield 90, 190, the recessed portion 76 is not exposed to the outside, and the entrance of the contaminant, etc. into the recessed portion 76 is prevented. Furthermore, because the wiring 85 is supported by the groove 77, the vibration of the wiring 85 is suppressed, and the wiring 85 is prevented from being damaged.

In addition, the fluid pressure valve device 50 has the plurality of accommodating holes 52 formed in the housing 51 and the plurality of spools 53 respectively accommodated in the plurality of accommodating holes 52 in a slidable manner, and in the spool-displacement detection device 100, the rod 60, the insertion hole 71 and the recessed portion 76 of the cap 70, the magnet 65, and the detection unit 80 are provided in multiple numbers correspondingly to the plurality of spools 53, and the magnetic shield 190 is provided continuously so as to respectively cover the plurality of recessed portions 76.

With this configuration, even with the fluid pressure valve device 50 having the plurality of spools 53, the plurality of detection units 80 can be covered with a single magnetic shield 190.

Embodiments of the present invention were described above, but the above embodiments are merely examples of applications of the present invention, and the technical scope of the present invention is not limited to the specific constitutions of the above embodiments.

With respect to the above description, the contents of application No. 2022-135704, with a filing date of August 29, 2022 in Japan, are incorporated herein by reference.

## Claims

1. A spool-displacement detection device for detecting a displacement amount of a spool of a valve device having a housing, an accommodating hole formed in the housing, and the spool slidably accommodated in the accommodating hole, the spool-displacement detection device comprising:
a displacement member supported at one end portion by the spool and configured to be displaced together with the spool;
a cap attached to an opening of the accommodating hole at an end surface of the housing;
a magnet provided on the displacement member and configured to be displaced together with the displacement member; and
a detection unit configured to detect a change in a magnetic field due to the displacement of the magnet, wherein
the cap is provided with an insertion hole through which the displacement member is inserted so as to be reciprocatable in a displacement direction and into which fluid biasing the spool is guided, and
the detection unit is attached to an outer circumferential surface of the cap.

2. The spool-displacement detection device according to claim 1, wherein
the displacement member is formed so as to have an outer diameter smaller than that of the spool, and
the cap is provided with:
a small-diameter portion in which the insertion hole is provided and the detection unit is attached to an outer circumferential surface of the small-diameter portion;
a pilot chamber communicating with the insertion hole such that the fluid is guided to the pilot chamber, and the pilot chamber having a diameter larger than that of the insertion hole such that the spool can enter the pilot chamber; and
a large-diameter portion in which the pilot chamber is provided and formed to have an outer diameter larger than that of the small-diameter portion.

3. The spool-displacement detection device according to claim 2, wherein
the insertion hole is formed so as to be smaller than an outer diameter of the spool.

4. The spool-displacement detection device according to claim 1, further comprising:
a recessed portion formed in the outer circumferential surface of the cap, recessed so as not to communicate with the insertion hole, and to which the detection unit is attached; and
a cover provided so as to cover the recessed portion, wherein
the outer circumferential surface of the cap is provided with a groove formed so as to be continuous with the recessed portion, and
a wiring for electrically connecting the detection unit and external device is inserted into the groove.

5. The spool-displacement detection device according to claim 4, wherein
the valve device has a plurality of of the accommodating holes formed in the housing and a plurality of the spools respectively accommodated in the plurality of accommodating holes in a slidable manner,
the displacement member, the insertion hole and the recessed portion of the cap, the magnet, and the detection unit are provided in multiple numbers correspondingly to the plurality of spools, and
the cover is provided continuously so as to respectively cover the plurality of recessed portions.
